# EUROPEAN PATENT APPLICATION

(11) **EP 4 318 750 A1**
(43) Date of publication of application: **07.02.2024**
(21) Application number: 21933805.0
(22) Date of filing: 31.03.2021
(51) Int. Cl.: H01M 50/181

(54) **BATTERY AND ELECTRIC DEVICE**

(71) Applicant: Ningde Amperex Technology Limited, Ningde, Fujian 352100 (CN)
(72) Inventor: DONG, Gang, Ningde, Fujian 352100 (CN)
(74) Representative: Icosa
(86) International application number: PCT/CN2021/084599
(87) International publication number: WO 2022/205140

(57) **Abstract**

Embodiments of this application relate to a battery and an electric device. The battery includes a conductive housing and an insulation layer disposed inside the housing, a pole, and a cell unit. The insulation layer is disposed on an inner wall of the housing, the pole penetrates through the insulation layer and the housing and is insulated from the housing through the insulation layer, and the cell unit includes stacked electrode plates and a separator disposed between every two electrode plates. The electrode plates include a first electrode plate and a second electrode plate. The first electrode plate includes a first current collector, where a first active layer is disposed on one side of the first current collector and an uncoated region without the first active layer is provided on the other side to form a first electrode output end of the cell unit, the first electrode output end is electrically connected to one of the pole or the housing, and the first active layer faces the separator. The second electrode plate includes a second current collector, where a second active layer is disposed on at least one side of the second current collector, the second current collector forms a second electrode output end, and the second electrode output end is electrically connected to the other one of the housing or the pole. The battery described above is thinner and has a higher energy density.

## Description

### TECHNICAL FIELD

Embodiments of this application relate to the field of battery technologies, and in particular, to a battery and an electric device.

### BACKGROUND

Stacked batteries are increasingly favored by battery manufacturers due to good cycling performance, safety performance, and high energy density. Existing stacked batteries have a plurality of electrode plates, with a current collector of each electrode plate extending to form a tab. The tabs of the plurality of electrode plates are welded through conductive metal strips to create positive and negative electrode connection ends of the stacked battery, where the stacked battery is wrapped in the conductive metal strips, with the positive and negative electrode connection ends bent and stacked on the outer-layer electrode plates. Due to its structure, the stacked battery is still thick and there is room for energy density optimization.

### SUMMARY

In view of the problem above, embodiments of this application provide a smaller thickness and a higher energy density of battery and an electric device.

An embodiment of this application provides a battery, including a conductive housing and an insulation layer, a pole, and a cell unit being disposed inside the housing. The insulation layer is disposed on an inner wall of the housing. The pole penetrates through the insulation layer and the housing, and is insulated from the housing through the insulation layer. The cell unit includes stacked electrode plates and a separator disposed between every two electrode plates, and the electrode plate includes a first electrode plate and a second electrode plate. The first electrode plate includes a first current collector, where a first active layer is disposed on one side of the first current collector and an uncoated region without a first active layer is provided on the other side to form a first electrode output end of the cell unit, the first electrode output end is electrically connected to one of the pole or the housing, and the first active layer faces the separator. The second electrode plate includes a second current collector, where a second active layer is disposed on at least one side of the second current collector, the second current collector forms a second electrode output end, and the second electrode output end is electrically connected to the other one of the housing or the pole.

In an embodiment, the battery further includes a first conduction layer and a second conduction layer, the first electrode output end is electrically connected to one of the pole or the housing through the first conduction layer, and the second electrode output end is electrically connected to the other one of the housing or the pole through the second conduction layer.

In an embodiment, the first conduction layer is a conductive adhesive layer, a conductive elastic sheet, or a welding layer.

In an embodiment, the second conduction layer is a conductive adhesive layer, a conductive elastic sheet, or a welding layer.

In an embodiment, a thickness of the conductive adhesive layer is 20-50 µm.

In an embodiment, the first conduction layer and the second conduction layer both have a thickness of 25-35 µm.

In an embodiment, the electrode plate further includes a third electrode plate disposed between the first electrode plate and the second electrode plate, and the third electrode plate includes a third current collector and active layers disposed on two sides of the third current collector.
the battery further comprises a current collector connecting layer electrically connecting current collectors of a plurality of electrode plates with the same polarity in a thickness direction of the electrode plate.

In an embodiment, the current collector connecting layer is a conductive adhesive layer or a welding layer.

In an embodiment, a cell insulation layer is disposed on an outer side of the current collector connecting layer connected to the pole, and/or the cell insulation layer is disposed at the periphery of the housing where the pole does not penetrate through, for insulation from the housing.

In an embodiment, the insulation layer, the pole, the cell unit, the first conduction layer, and the second conduction layer are stacked with a thickness greater than a height of an accommodating cavity of the housing, so that the insulation layer, the pole, the cell unit, the first conduction layer, and the second conduction layer are tightly connected.

In an embodiment, the insulation layer fully covers a surface of the pole close to the housing; and/or
the pole fully covers the first conduction layer or the second conduction layer connected thereto, and covers the first electrode output end or the second electrode output end connected thereto.

In an embodiment, the battery is a button battery.

Another embodiment of this application further provides an electric device, including any one of the foregoing batteries.

In the battery provided by some embodiments of this application, the first electrode output end has only one active layer and is electrically connected to the pole or the housing relying on an exposed uncoated region. Compared with conventional batteries, one active layer is saved and the thickness of the conductive metal strips stacked on the cell unit is spared, making the battery thinner with a higher energy density.

### BRIEF DESCRIPTION OF DRAWINGS

To describe the technical solutions in specific embodiments of this application or the prior art more clearly, the following briefly describes the accompanying drawings required for describing the specific embodiments or the prior art. In all the accompanying drawings, similar components or parts are generally identified by similar reference signs. In the accompanying drawings, the components or parts may not be drawn to scale.
FIG. 1 is a schematic structural diagram of a battery according to an embodiment of this application; and
FIG. 2 to FIG. 5 are cross-sectional views of the battery of this application in different embodiments.

### DESCRIPTION OF EMBODIMENTS

To help better understand this application, the following describes this application in detail with reference to the accompanying drawings and specific embodiments. It should be noted that when a component is referred to as being "fixed to" another component, it may be directly fixed to the another component, or there may be one or more components in between. When a component is referred to as being "connected to" another component, it may be directly connected to the another component, or there may be one or more components in between. The terms "perpendicular", "horizontal", "left", "right", and other similar expressions as used herein are for illustration only.

Unless otherwise defined, all technical and scientific terms used herein shall have the same meanings as commonly understood by those skilled in the art to which this application belongs. The terms used herein in the specification of this application are only used to describe specific embodiments, and are not intended to limit this application. The term "and/or" used herein includes any and all combinations of one or more related listed items.

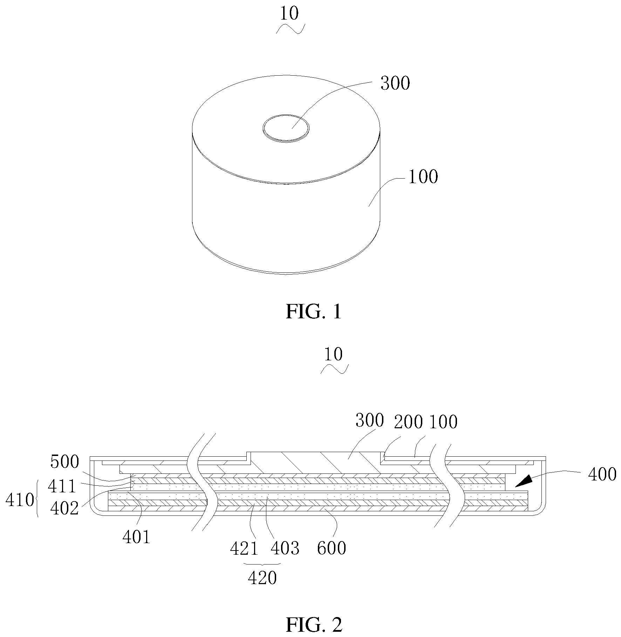

Referring to FIG. 1 to FIG. 3, FIG. 1 to FIG. 3 are schematic structural diagrams of batteries according to embodiments of this application and cross-sectional views of the batteries according to different embodiments.

A battery 10 and a battery 11 include a conductive housing 100 and an insulation layer 200 a pole 300, and a cell unit 400 being disposed inside the housing 100. The housing 100 and the pole 300 have different polarities, the insulation layer 200 is disposed on an inner wall of the housing 100, the pole 300 penetrates through the insulation layer 200 and the housing 100 and is insulated from the housing 100 through the insulation layer 200. The cell unit 400 includes stacked electrode plates and a separator 401 disposed between every two electrode plates, and two electrode output ends of the cell unit 400 are connected to the housing 100 and the pole 300 respectively.

The electrode plates include a first electrode plate 410 and a second electrode plate 420. The first electrode plate 410 has a first current collector 411, where a first active layer 402 is disposed on one side of the first current collector 411 and an uncoated region without the first active layer 402 is provided on the other side to form a first electrode output end of the cell unit 400, and the first active layer 402 faces the separator 401. The second electrode plate 420 has a second current collector 421, where a second active layer 403 is disposed on at least one side of the second current collector 421, and the second current collector 421 forms a second electrode output end. The two electrode output ends are connected to the pole 300 and the housing 100 respectively, where the first electrode output end may be connected to either the pole 300 or the housing 100. The first active layer and the second active layer are active layers with their polarities corresponding to the first electrode plate and the second electrode plate respectively.

In this embodiment, the battery is a button battery, and in other embodiments, the battery may be a battery of another type.

In the foregoing battery, the first electrode output end has only one active layer and is electrically connected to the pole 300 or the housing 100 relying on an exposed uncoated region. Compared with conventional batteries, one active layer is saved and the thickness of the conductive metal strips stacked on the cell unit 400 for welding is spared, making the battery thinner with a higher energy density.

In the embodiment shown in FIG. 2, the second active layer 403 is disposed on one side of the second current collector 421 of the second electrode plate 420 of the battery 10 and an uncoated region without the second active layer 403 is provided on the other side to form a second electrode output end of the cell unit 400, and the second active layer 403 faces the separator 401. In this embodiment, the use of the second electrode plate 420 with a single second active layer 403 further reduces the thickness of the battery 10 and increases its energy density.

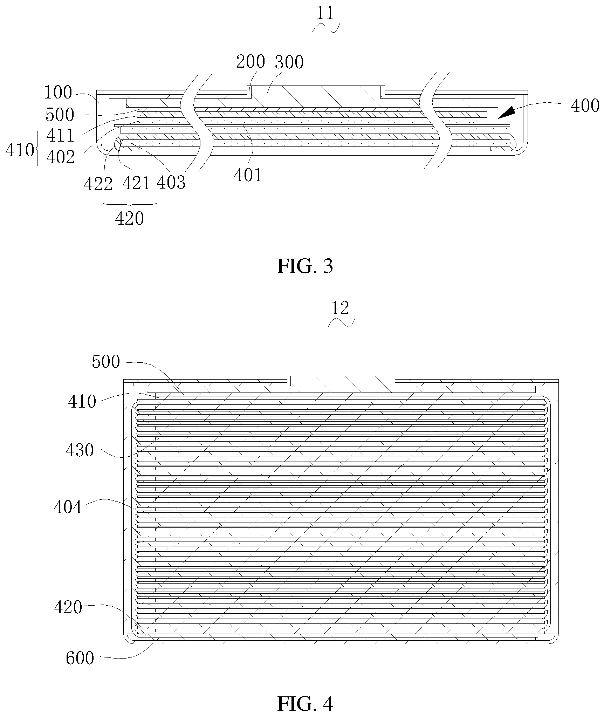

In the embodiment shown in FIG. 3, the second active layer 403 is disposed on both sides of the second current collector 421 of the second electrode plate 420 of the battery 11. In this case, the second electrode output end is formed by a tab 422 extending from the second current collector 421 of the second electrode plate 420 for electrical connection with the pole 300 or the housing 100.

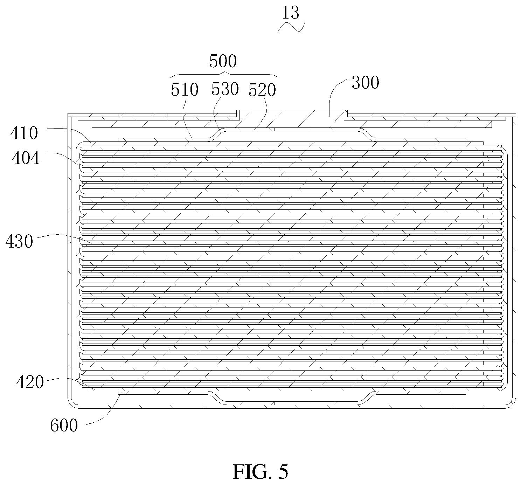

In the embodiment shown in FIG. 4 and FIG. 5, electrode plates of a battery 12 and a battery 13 further include a third electrode plate 430 disposed between the first electrode plate 410 and the second electrode plate 420. The third electrode plate 430 has a third current collector and active layers disposed on two sides of the third current collector, where the active layers on the two sides of the third current collector are arranged with a polarity in correspondence with the polarity of the third electrode plate, which may be a first active layer or a second active layer. In this case, the battery 12 and the battery 13 further include a current collector connecting layer 404 electrically connecting current collectors of a plurality of electrode plates with the same polarity in a thickness direction of the electrode plate, so that the current collectors with the same polarity are all electrically connected to the corresponding electrode output end. Specifically, a plurality of third electrode plates 430 are provided, and two current collector connecting layers 404 are provided. One of the current collector connecting layers 404 is electrically connected to the first current collector 411 and the third current collector 431 having the same polarity as the first current collector 411, and the other one of the current collector connecting layers 404 is electrically connected to the second current collector 421 and the third current collector 431 having the same polarity as the second current collector 421, so that the current collectors with the same polarity are all electrically connected to the corresponding electrode output end.

In an embodiment, each electrode plate extends to form a tab, and the current collector connecting layer 404 connects the current collectors through the tabs. In this case, the current collector connecting layer 404 may be a conductive adhesive layer or welding layer connecting a plurality of electrode plates through bonding with conductive adhesive or welding. The tab has a length of 2-10 mm, and the conductive adhesive layer has a length of 20-50 µm. For example, the length of the tab is 4 mm or 5 mm. For another example, the thickness of the conductive adhesive is 30 µm. When a plurality of electrode plates are connected by conductive adhesive, the process is simplified, and the electrode plates have a reduced tab length compared with conventional welding method and therefore costs are reduced.

In an embodiment, the battery further includes a first conduction layer 500 and a second conduction layer 600, which are used to connect the two electrode output ends to the housing 100 and the pole 300 respectively. The first electrode output end is electrically connected to one of the pole 300 or the housing 100 through the first conduction layer 500, and the second electrode output end is electrically connected to the other one of the housing 100 or the pole 300 through the second conduction layer 600.

When a current collector has an uncoated region, that is, when the current collector is the first current collector 411 or the second current collector 421 with only one second active layer 403, the first conduction layer 500 and the second conduction layer 600 may be conductive adhesive layers or conductive elastic sheets.

Specifically, in the embodiments shown in FIG. 2, FIG. 3, and FIG. 4, the uncoated region of a current collector is attached to the pole 300 or the housing 100 through the conductive adhesive layer. In the embodiment shown in FIG. 5, the first conduction layer 500 and the second conduction layer 600 are conductive elastic sheets. Relying on elastic force, the conductive elastic sheet abuts against the pole 300 or the housing 100 on one side, and abuts against the uncoated region of the current collector on the other side. The conductive elastic sheet has two first abutting regions 510, two second abutting regions 520, and a connecting region 530 that connects the first abutting region 510 and the second abutting region 520. The first abutting region 510 abuts against the uncoated region, the second abutting region 520 abuts against the pole 300 or the housing 100, and the first abutting region is parallel to the second abutting region. It should be noted that when the conduction layer is a conductive elastic sheet, the housing 100 or the pole 300 connected with the conductive elastic sheet is further provided with a restraint member to restrain the elastic sheet. For example, the restraint member is a restraining groove.

When the current collector does not have an uncoated region, that is, when the second active layer 403 is provided on both sides of the second current collector 421, the second conduction layer 600 is a welding layer. In this case, the tab of the second current collector 421 is welded to the housing 100 or the pole 300 through welding.

The first conduction layer 500 and the second conduction layer 600 both have a thickness of 0.01-2 mm, and have a thickness of 20-50 µm when they are conductive adhesive layers. The thicknesses of the two conduction layers may be the same or different. For example, both the first conduction layer 500 and the second conduction layer 600 have a thickness of 25-35 µm and are conductive adhesive layers. For another example, the first conduction layer 500 and the second conduction layer 600 are both conductive adhesive layers with a thickness of 30 µm.

In an embodiment, the insulation layer 200, the pole 300, the cell unit 400, the first conduction layer 500, and the second conduction layer 600 are stacked with a thickness greater than a height of an accommodating cavity of the housing 100, so that the insulation layer 200, the pole 300, the cell unit 400, the first conduction layer 500, and the second conduction layer 600 are tightly connected. For example, the thickness of the stack of the insulation layer 200, the pole 300, the cell unit 400, the first conduction layer 500, and the second conduction layer 600 is 1-5 mm greater than the height of the accommodating cavity of the housing 100.

For improved insulation between two electrodes of different polarities of the battery, the insulation layer 200 fully covers a surface of the pole 300 close to the housing 100 so that the pole 300 is separated and insulated from the housing 100 more reliably, where the insulation layer 200 has a thickness of 0.01-0.3 mm. It should be noted that the insulation layer 200 may alternatively have another thickness. In an embodiment, the cell insulation layer 200 is disposed on an outer side of the current collector connecting layer 404 connected to the pole 300, and/or the cell insulation layer 200 is disposed at the periphery of the housing 100 where the pole 300 does not penetrate through, for insulation from the housing 100. so that the current collector connecting layer 404 connected to the pole 300 and the pole 300 are insulated from the housing 100.

In an embodiment, the pole 300 is step-shaped. One end of the step-shaped pole 300 is 0.1-0.5 mm thick and penetrates through the housing 100. In an embodiment, one end of the step-shaped pole 300 does not extend out of the housing 100, meaning a plane where a top surface of the one end of pole 300 is located is lower than or level with an outer surface of housing 100. Another end of the pole 300 is 0.1-2 mm thick. When the pole 300 is provided with a cell insulation layer 200, the cell insulation layer 200 is disposed at the periphery of the end portion.

For a better electrical connection performance of the battery, in an embodiment, the pole 300 fully covers the first conduction layer 500 or the second conduction layer 600 connected thereto, and covers the first electrode output end or the second electrode output end connected thereto. In this way, electrode output ends of the cell unit 400 can be connected to the electrodes more reliably during production.

Another embodiment of this application further provides an electric device, including the battery according to any one of the foregoing embodiments, so as to reduce the volume of the electric device and prolong the power supply life of the battery.

The foregoing descriptions are merely some embodiments of this application which are not intended to limit the patent scope of this application. Any equivalent structures or equivalent process transformations made based on the descriptions and accompanying drawings of this application, or direct or indirect applications in other related technical fields, are equally included in the scope of patent protection of this application.

## Claims

1. A battery, comprising a conductive housing and an insulation layer, a pole, and a cell unit disposed inside the housing; wherein
the insulation layer is disposed on an inner wall of the housing;
the pole penetrates through the insulation layer and the housing, and is insulated from the housing through the insulation layer;
the cell unit comprises stacked electrode plates and a separator disposed between every two electrode plates, wherein the electrode plate comprises:
a first electrode plate, comprising a first current collector, wherein a first active layer is disposed on one side of the first current collector and an uncoated region without a first active layer is provided on the other side to form a first electrode output end of the cell unit, the first electrode output end is electrically connected to one of the pole or the housing, and the first active layer faces the separator; and
a second electrode plate, comprising a second current collector, wherein a second active layer is disposed on at least one side of the second current collector, the second current collector forms a second electrode output end, and the second electrode output end is electrically connected to the other one of the housing or the pole.

2. The battery according to claim 1 wherein the battery further comprises a first conduction layer and a second conduction layer, the first electrode output end is electrically connected to one of the pole or the housing through the first conduction layer, and the second electrode output end is electrically connected to the other one of the housing or the pole through the second conduction layer.

3. The battery according to claim 2, wherein the first conduction layer is a conductive adhesive layer, a conductive elastic sheet, or a welding layer.

4. The battery according to claim 2, wherein the second conduction layer is a conductive adhesive layer, a conductive elastic sheet, or a welding layer.

5. The battery according to any one of claims 2 to 4, wherein a thickness of the conductive adhesive layer is 20-50 µm.

6. The battery according to claim 2, wherein the first conduction layer and the second conduction layer both have a thickness of 25-35 µm.

7. The battery according to claim 1, wherein the electrode plate further comprises a third electrode plate disposed between the first electrode plate and the second electrode plate, and the third electrode plate comprises a third current collector and active layers disposed on two sides of the third current collector, wherein
the battery further comprises a current collector connecting layer electrically connecting current collectors of a plurality of electrode plates with the same polarity in a thickness direction of the electrode plate.

8. The battery according to claim 7, wherein the current collector connecting layer is a conductive adhesive layer or a welding layer.

9. The battery according to claim 7, wherein a cell insulation layer is disposed on an outer side of the current collector connecting layer connected to the pole, and/or the cell insulation layer is disposed at the periphery of the housing where the pole does not penetrate through, for insulation from the housing.

10. The battery according to claim 1, wherein the insulation layer, the pole, the cell unit, the first conduction layer, and the second conduction layer are stacked with a thickness greater than a height of an accommodating cavity of the housing, so that the insulation layer, the pole, the cell unit, the first conduction layer, and the second conduction layer are tightly connected.

11. The battery according to claim 2, wherein the insulation layer fully covers a surface of the pole close to the housing; and/or
the pole fully covers the first conduction layer or the second conduction layer connected thereto, and covers the first electrode output end or the second electrode output end connected thereto.

12. The battery according to claim 1, wherein the battery is a button battery.

13. An electric device, comprising the battery according to any one of claims 1 to 12.
